(19)

Europäisches
Patentamt
European
Patent Office
Office européen
des brevets

(11) **EP 4 782 254 A1**

(12) **EUROPEAN PATENT APPLICATION**

(43) Date of publication:
**29.07.2026 Bulletin 2026/31**

(21) Application number: **26151015.0**

(22) Date of filing: **09.01.2026**

(51) International Patent Classification (IPC):
**B60L 53/14** *(2019.01)*     **B60L 53/51** *(2019.01)*
**B60L 53/63** *(2019.01)*     **B60L 53/67** *(2019.01)*
**H02J 3/38** *(2026.01)*

(52) Cooperative Patent Classification (CPC):
**B60L 53/51; B60L 53/14; B60L 53/63; B60L 53/67;
H02J 3/381; H02J 7/35;** B60L 2240/80

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **23.01.2025 JP 2025009521**

(71) Applicant: **Prime Planet Energy & Solutions, Inc.
Chuo-ku, Tokyo 103-0022 (JP)**

(72) Inventor: **KOH, Hideki
Tokyo, 103-0022 (JP)**

(74) Representative: **Kuhnen & Wacker
Patent- und Rechtsanwaltsbüro PartG mbB
Prinz-Ludwig-Straße 40 A
85354 Freising (DE)**

(54) **POWER SUPPLY SYSTEM**

(57)    A controller of a power supply system includes a first acquirer that acquires a required charge amount of each of secondary batteries of vehicles connected to power supply cables, a second acquirer that acquires a parking time zone of each of the vehicles, a predictor that calculates a predicted renewable energy power amount associated with an elapsed time by a renewable energy power supply, a planner that makes a charging plan in which each vehicle is charged with the required charge amount of power in the parking time zone and a first charging mode or a second charging mode is set such that, based on the predicted renewable energy power amount associated with the elapsed time, a renewable energy ratio is maximized, and a charging controller that controls opening and closing a switch such that the vehicles are charged in accordance with the charging plan.

FIG.2

**Description**

BACKGROUND

The present invention relates to a power supply system.

For example, JPH10-80071 discloses a charging control device that charges a plurality of battery electric vehicles with electric power in a late-night power time zone. This charging control device measures a discharge amount of each battery electric vehicle and determines a charging time in accordance with the discharge amount. The charging times of the battery electric vehicles are set such that charging of the battery electric vehicle with the longest charging time in the plurality of battery electric vehicles starts at the start time of the late-night power time zone, and charging of the battery electric vehicle with the shortest charging time ends at the end time of the late-night power time zone.

For example, JP2012-90378 discloses a quick charger that sequentially charges batteries of a plurality of battery electric vehicles. The quick charger includes multiple power supply plugs allowed to be connected to the battery electric vehicles.

The quick charger includes a registration part and a control part. The registration part sets at least one of a charging execution time, a priority level, and a charge amount for the battery electric vehicle connected to the power supply plug, and registers the vehicle as a charging object vehicle. The control part determines the content and the registration order set by the registration part, and sequentially changes the charging for the charging object vehicle based on the determination result.

SUMMARY

In charging a battery electric vehicle, electric power supplied to the battery electric vehicle can be electric power supplied from a so-called commercial system power supply and electric power supplied from a renewable energy power supply that generates power using renewable energy as an energy source. From the viewpoint of environment, in charging a plurality of battery electric vehicles, electric power supplied to the battery electric vehicles is preferably electric power supplied from a renewable energy power supply rather than a system power supply.

A power supply system disclosed here includes: a plurality of power supply cables individually connected to secondary batteries mounted on a plurality of vehicles; a power supply that is connected to the power supply cables and supplies electric power to the secondary batteries of the vehicles; a switch that is located between each of the power supply cables and the power supply and opens and closes electrical connection between the corresponding secondary battery and the power supply; and a controller. Each of the power supply cables is configured such that a maximum amount of electric power allowed to be supplied to the corresponding secondary battery per unit time is a reference power amount. A sum of the reference power amounts of the power supply cables is defined as a total reference power amount. A first charging mode in which the vehicles are charged at a time using electric power of the total reference power amount and a second charging mode in which any one of the vehicles is charged using electric power of the reference power amount are set beforehand as charging modes in charging the vehicles. The power supply includes a system power supply that obtains electric power by purchasing electric power, and a renewable energy power supply that generates electric power by renewable energy. The controller includes a first acquirer, a second acquirer, a predictor, a planner, and a charging controller. The first acquirer acquires a required charge amount of each of the secondary batteries of the vehicles connected to the power supply cables. The second acquirer acquires a parking time zone of each of the vehicles including the secondary batteries connected to the power supply cables. The predictor calculates a predicted renewable energy power amount associated with an elapsed time by the renewable energy power supply. The planner makes a charging plan in which each of the vehicles is charged with the required charge amount of power in the parking time zone of the vehicle and a time zone of the first charging mode or the second charging mode is set such that, based on the predicted renewable energy power amount associated with the elapsed time, a renewable energy ratio that is a proportion of an amount of renewable energy power generated by the renewable energy power supply with respect to a total amount of power in charging the vehicles is maximized. The charging controller controls opening and closing the switch such that the vehicles are charged in accordance with the charging plan.

In the power supply system disclosed here, in the case of charging the secondary batteries of the plurality of vehicles, the time zone of the first charging mode or the second charging mode is set in the parking time zone such that the renewable energy ratio is maximized. Accordingly, by charging the vehicles in accordance with the charging plan, the vehicles can be charged such that the renewable energy ratio is maximized. As a result, in charging the secondary batteries of the vehicles, a larger amount of electric power generated from the renewable energy power supply can be supplied for charging the secondary batteries.

BRIEF DESCRIPTION OF THE DRAWINGS

FIG. 1 is a conceptual view illustrating a power supply system according to a preferred embodiment.

FIG. 2 is a block diagram of the power supply system according to the preferred embodiment.

FIG. 3 is an illustration for a charging mode.

FIG. 4 is a view illustrating an example of a setting screen.

FIG. 5 is a flowchart showing a procedure of charging secondary batteries mounted on a plurality of vehicles.

FIG. 6 is a graph showing an example of a charging plan.

FIG. 7 is a graph showing an example of the charging plan.

FIG. 8 is a graph showing an example of the charging plan.

FIG. 9 is a graph showing an example of the charging plan.

FIG. 10 is a diagram showing an example of a learning model generated by machine learning.

FIG. 11 is a diagram showing machine learning.

FIG. 12 is a view showing a renewable energy ratio.

FIG. 13 is a view illustrating an example of a state screen.

DETAILED DESCRIPTION

One preferred embodiment of a power supply system disclosed here will be described hereinafter with reference to the drawings. The preferred embodiment described here is, of course, not intended to particularly limit the present disclosure. The present disclosure is not limited to the preferred embodiment disclosed here unless otherwise specified. Members and parts having the same functions are denoted by the same reference numerals as appropriate, and description for the same members and parts will not be repeated as appropriate.

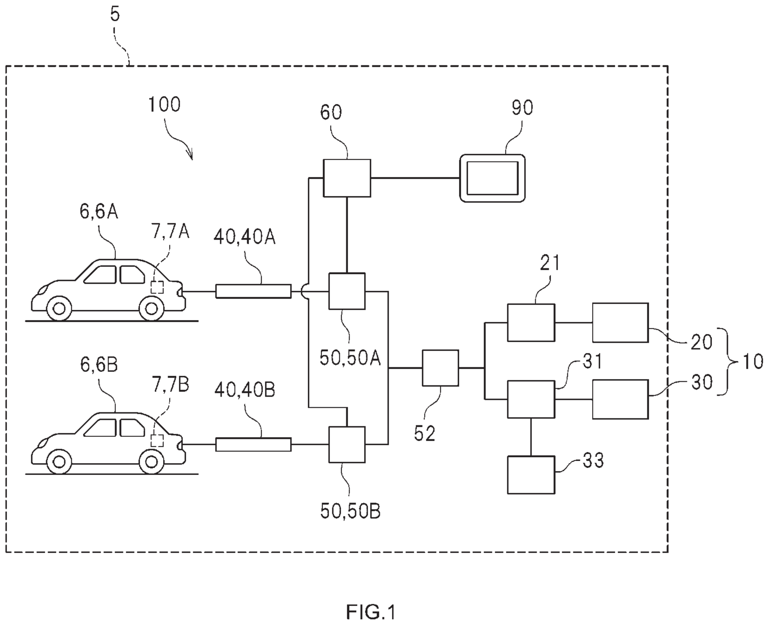

FIG. 1 is a conceptual view illustrating a power supply system 100 according to this preferred embodiment. The power supply system 100 according to this preferred embodiment is a system that supplies electric power to vehicles 6 in an owned facility 5 of a user. The user as used herein is a customer of a provider that provides the power supply system 100, and is a user registered in the power supply system 100.

The owned facility 5 is a facility owned by a user. In this example, the owned facility 5 is a facility used by a user. For example, the owned facility 5 is a house owned by a user. The term "house" as used herein is not particularly limited with regard to whether or not the user resides therein. For example, the house may be a residence (in other words, a building) for the user, or may be a rental house. The owned facility 5 is not limited to a house. The owned facility 5 may be, for example, a building of an office or a company operated by the user.

The vehicle 6 is, for example, a vehicle owned or used by a user. A secondary battery 7 is mounted on the vehicle 6. The secondary battery 7 can be repeatedly charged and discharged by movement of charge carriers between a pair of electrodes (e.g., a positive electrode and a negative electrode) via an electrolyte, for example. As the secondary battery 7, a battery such as a lithium ion secondary battery or a nickel hydrogen battery may be used. In this preferred embodiment, the secondary battery 7 is a lithium ion secondary battery. In this example, the vehicle 6 is a vehicle using the secondary battery 7 as a driving source. The vehicle 6 is a vehicle using electric power of a battery electric vehicle, a hybrid electric vehicle, or a plug-in hybrid electric vehicle as a driving source. The vehicle 6 may be a four-wheeled vehicle or a two-wheeled vehicle. Charging of the vehicle 6 herein refers to charging of the secondary battery 7 mounted on the vehicle 6.

In this preferred embodiment, the user owns or uses a plurality of vehicles 6. In this example, the number of the vehicles 6 is two, but may be three or more. The vehicles 6 include a first vehicle 6A and a second vehicle 6B different from the first vehicle 6A. The secondary battery 7 mounted on the first vehicle 6A herein will also be referred to as a first secondary battery 7A. The secondary battery 7 mounted on the second vehicle 6B will also be referred to as a second secondary battery 7B.

The power supply system 100 is a system that supplies electric power to the secondary batteries 7 mounted on the plurality of vehicles 6 (the first vehicle 6A and the second vehicle 6B in this example). In this preferred embodiment, the power supply system 100 is implemented by, for example, a client server system. Alternatively, the power supply system 100 may be implemented by cloud computing. As illustrated in FIG. 1, the power supply system 100 includes a power supply 10, power supply cables 40, switches 50, a controller 60, and a user terminal 90.

The power supply 10 supplies electric power to the secondary batteries 7 mounted on the plurality of vehicles 6. In this preferred embodiment, the power supply 10 includes a system power supply 20 and a renewable energy power supply 30. The system power supply 20 is a supply source that supplies electric power from a commercial system (e.g., electric power company). The electric power supplied from the system power supply 20 is electric power purchased by a user from an electric power company, and is so-called purchased electric power. The system power supply 20 is a power supply that obtains electric power by purchasing the power.

In this preferred embodiment, as illustrated in FIG. 1, a so-called smart meter 21 may be connected to the system power supply 20. The smart meter 21 has the function of measuring the amount of electric power supplied from the system power supply 20 digitally, and also has a communication function. The smart meter 21 is an electronic watt-hour meter.

The renewable energy power supply 30 is generated by renewable energy. Electric power generated by renewable energy herein will also be referred to as renewable energy power. Examples of an energy source of the renewable energy include sunlight, wind power, water power, geothermal heat, solar heat, heat existing in the atmosphere or in nature, and biomass. An energy source of renewable energy by the renewable energy power supply 30 is not particularly limited. In this preferred embodiment, the renewable energy power supply 30 is a solar power supply using sunlight as an energy source. The solar power supply generates power by sunlight. The renewable energy power supply 30 includes, for example, a solar panel (not shown) that receives sunlight. The renewable energy power supply 30 is, for example, a power supply installed in the owned facility 5 or a device owned by a user.

In this preferred embodiment, as illustrated in FIG. 1, a power conditioner 31 and a storage battery 33 may be connected to the renewable energy power supply 30. The power conditioner 31 functions as a controller that determines a supply destination of electric power generated by the renewable energy power supply 30, for example. The supply destination of electric power herein is the first vehicle 6A and the second vehicle 6B, or a load placed in the owned facility 5. The load is, for example, a household electrical appliance using electric power as a driving source. Examples of the household electrical appliance include a television, a refrigerator, an air conditioner, and a vacuum cleaner. The storage battery 33 is, for example, a device that temporarily stores electric power generated by the renewable energy power supply 30. The storage battery 33 is electrically connected to the power conditioner 31, and connected to the renewable energy power supply 30 via the power conditioner 31. The power conditioner 31 controls selective supply of electric power generated from the renewable energy power supply 30 to the secondary batteries 7 mounted on the plurality of vehicles 6 or to the load in the owned facility. The power conditioner 31 controls supply of electric power generated by the renewable energy power supply 30 to the storage battery 33 when no electric power is supplied to the secondary batteries 7 (e.g., the first secondary battery 7A and the second secondary battery 7B) or the load. The power conditioner 31 may be configured to sell electric power generated by the renewable energy power supply 30 to a electric power company.

The power supply cables 40 are cables connected to the secondary batteries 7 mounted on the vehicles 6. Although not shown, each of the power supply cables 40 includes, for example, a charging connector located at one end and a power plug located at the other end. The charging connector of each power supply cable 40 is connected to the vehicle 6. Thus, one end of the power supply cable 40 is connected to the secondary battery 7 of the vehicle 6. For example, a plug socket (not shown) is installed in the owned facility 5. The plug socket is connected to the power supply 10 (specifically, the system power supply 20 and the renewable energy power supply 30). The power plug of the power cable 40 is connected to a plug socket of the owned facility 5. Accordingly, the other end of the power supply cable 40 is connected to the power supply 10 via the plug socket. In this preferred embodiment, the power supply cables 40 are of a so-called MODE2 type. Alternatively, the power supply cables 40 may be of a MODE1 type. The power supply cables 40 are expected to be able to introduce charging of the vehicles 6 in the owned facility 5 at a low cost, unlike so-called vehicle to home (V2H) equipment, compared to V2H equipment.

The number of power supply cables 40 is preferably equal to the number of vehicles 6 of the user. The number of power supply cables 40 herein is two, which is equal to the number of vehicles 6. The power supply cables 40 include a first power supply cable 40A and a second power supply cable 40B different from the first power supply cable 40A. The first power supply cable 40A and the second power supply cable 40B may be both connected to the first vehicle 6A or connected to the second vehicle 6B. Alternatively, for convenience of description, the first power supply cable 40A is connected to the first secondary battery 7A mounted on the first vehicle 6A, and the second power supply cable 40B is connected to the second secondary battery 7B mounted on the second vehicle 6B in this example.

Each of the switch 50 is located between the power supply 10 and a corresponding one of the power supply cables 40, and opens and closes electrical connection between the power supply 10 and the secondary battery 7. Each switch 50 opens and closes electrically. The switch 50 herein opens and closes by turning the switch 50 on or off. While the switch 50 is on, the secondary battery 7 and the power supply 10 are in a connected state, and electric power is supplied from the power supply 10 to the secondary battery 7, and the secondary battery 7 is charged. While the switch 50 is off, electric power is not supplied from the power supply 10 to the secondary battery 7, and the secondary battery 7 is not charged. The switch 50 is electrically connected to the power supply cable 40. Specifically, when the power supply cable 40 is connected to the plug socket of the owned facility 5, the power supply cable 40 is electrically connected to the switch 50. In this preferred embodiment, as illustrated in FIG. 1, the switch 50 is connected to a panel board 52. The panel board 52 is connected to the system power supply 20 via the smart meter 21. The panel board 52 is connected to the renewable energy power supply 30 via the power conditioner 31. Thus, the switch 50 is electrically connected to the system power supply 20 and the renewable energy power supply 30 via the panel board 52.

The number of switches 50 is preferably equal to the number of power supply cables 40. The number of switches 50 herein is two, which is equal to the number of power supply cables 40. The switches 50 include a first switch 50A and a second switch 50B different from the first switch 50A. The first switch 50A and the second switch 50B may be both connected to the first power supply cable 40A or connected to the second power supply cable 40B. However, for convenience of description, the first switch 50A is connected to the first power supply cable 40A, and the second switch 50B is connected to the second power supply cable 40B in this example. The first switch 50A is located between the first power supply cable 40A and the power supply 10, and opens and closes electrical connection between the first secondary battery 7A of the first vehicle 6A and the power supply 10. While the first switch 50A is on, the first secondary battery 7A and the power supply 10 are in a connected state, and electric power is supplied from the power supply 10 to the first secondary battery 7A, and the first secondary battery 7A is charged. While the first switch 50A is off, no electric power is supplied from the power supply 10 to the first secondary battery 7A, and the first secondary battery 7A is not charged. The second switch 50B is located between the second power supply cable 40B and the power supply 10, and opens and closes electrical connection between the second secondary battery 7B of the second vehicle 6B and the power supply 10. While the switch 50B is on, the second secondary battery 7B and the power supply 10 are in a connected state, and electric power is supplied from the power supply 10 to the second secondary battery 7B, and the second secondary battery 7B is charged. While the second switch 50B is off, no electric power is supplied from the power supply 10 to the secondary battery 7B, and the secondary battery 7B is not charged. The first switch 50A and the second switch 50B are connected to the panel board 52 and are electrically connected to the system power supply 20 and the renewable energy power supply 30 via the panel board 52.

The controller 60 controls supply of electric power in the owned facility 5. The controller 60 herein controls charging of the secondary batteries 7 of the plurality of vehicles 6 (the first vehicle 6A and the second vehicle 6B in this example) connected to the power supply cables 40. The configuration of the controller 60 is not particularly limited. The controller 60 is, for example, a microcomputer. The controller 60 includes, for example, an I/F, a CPU, a ROM, and a RAM.

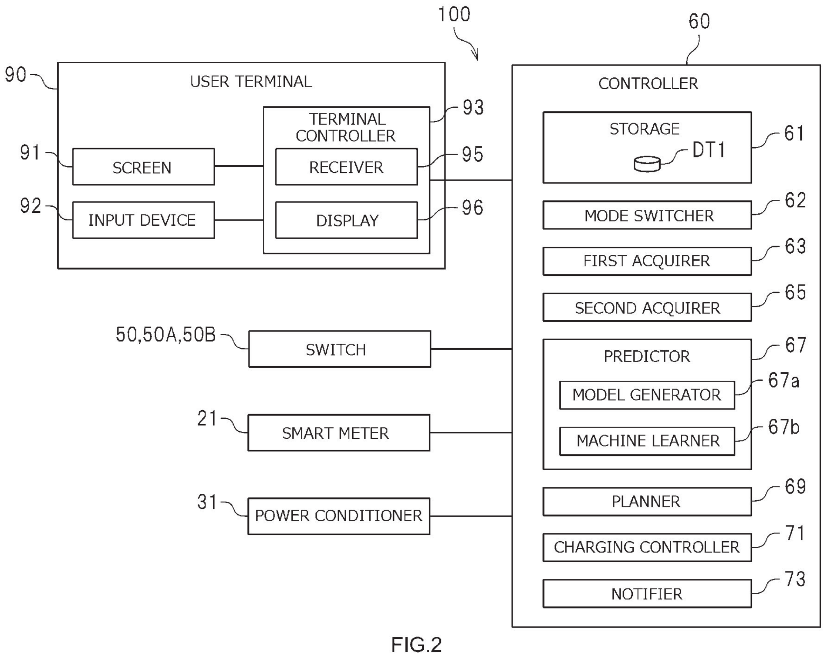

FIG. 2 is a block diagram of the power supply system 100 according to this preferred embodiment. In this preferred embodiment, as illustrated in FIG. 2, the controller 60 is communicably connected to the user terminal 90, the switches 50 (specifically, the first switch 50A and the second switch 50B), the smart meter 21, and the power conditioner 31. The controller 60 can control opening and closing of the switches 50 (i.e., turning the switches 50 on or off). When the controller 60 performs control of turning one of the switch 50 on, charging of the vehicle 6 connected to the corresponding power supply cable 40 is started. When the controller 60 performs control of turning one of the switch 50 off, charging to the vehicle 6 connected to the corresponding power supply cable 40 is stopped. In this example, when the first switch 50A is turned on, charging of the first vehicle 6A connected to the first power supply cable 40A is started. When the first switch 50A is turned off, charging of the first vehicle 6A connected to the first power supply cable 40A is stopped. Similarly, when the second switch 50B is turned on, charging of the second vehicle 6B connected to the second power supply cable 40B is started. When the switch 50B is turned off, charging of the second vehicle 6B connected to the second power supply cable 40B is stopped. In this preferred embodiment, the controller 60 is configured such that the controller 60 cannot acquire states of charge (SOC) of the secondary batteries 7 (the first secondary battery 7A of the first vehicle 6A and the second secondary battery 7B of the second vehicle 6B in this example) mounted on the vehicles 6 (e.g., the controller 60 cannot acquire the SOC from the vehicles 6). The SOC is an index indicating a battery capacity when a fully charged state of the secondary battery 7 is 100% and a fully discharged state is 0%.

The user terminal 90 is a terminal to be used by a user using the vehicles 6 (the first vehicle 6A and the second vehicle 6B in this example). In other words, the user terminal 90 is a terminal to be used by a user who owns the owned facility 5. The number of user terminals 90 is not particularly limited. In the example of FIG. 1, the number of user terminals 90 is one, but may be two or more. The user terminal 90 is, for example, a smartphone, a tablet terminal, a personal computer of a desktop type or a laptop type used by the user. The user terminal 90 may be, for example, a car navigation system mounted on the vehicle 6. As illustrated in FIG. 1, the user terminal 90 is communicably connected to the controller 60. For example, the user terminal 90 is connected to the controller 60 via the Internet.

As illustrated in FIG. 2, the user terminal 90 includes a screen 91, an input device 92 for input by user's operation, such as a touch panel, a keyboard, or a mouse, and a terminal controller 93. The terminal controller 93 is communicably connected to the screen 91 and the input device 92. The terminal controller 93 is, for example, a microcomputer. The terminal controller 93 includes, for example, an I/F, a CPU, a ROM, and a RAM.

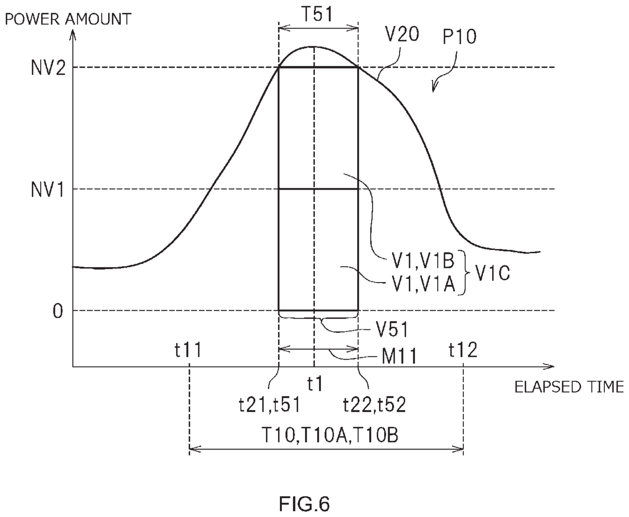

In this preferred embodiment, in charging the vehicle 6, the vehicle 6 is connected to the power supply cable 40. The power supply cable 40 herein is a cable configured such that the maximum amount of electric power allowed to be supplied to the secondary battery 7 of the vehicle 6 per unit time is a reference power amount NV1 (see FIG. 6). A specific value of the reference power amount NV1 is not particularly limited, and is, for example, 3 kWh. In this preferred embodiment, quantitative charging is performed on the vehicle 6 connected to the power supply cable 40. In the quantitative charging, electric power of the reference power amount NV1 is supplied per unit time to the secondary battery 7 mounted on the vehicle 6 connected to one power supply cable 40, thereby charging the vehicle 6. In the quantitative charging, in a case where the power supply amount that is the maximum amount of electric power allowed to be supplied per unit time from the power supply 10 is greater than or equal to the reference power amount NV1, electric power of the reference power amount NV1 is supplied to the vehicle 6 for charging. On the other hand, in a case where the amount of electric power allowed to be supplied from the power supply 10 is less than the reference power amount NV1, electric power of the power supply amount is supplied to the vehicle 6 for charging.

In this preferred embodiment, the reference power amount NV1 in the first power supply cable 40A is equal to the reference power amount NV1 in the second power supply cable 40B. Alternatively, the reference power amounts NV1 in the first power supply cable 40A and the second power supply cable 40B may be different. The sum of the reference power amount NV1 in the first power supply cable 40A and the reference power amount NV1 in the second power supply cable 40B herein is referred to as a total reference power amount NV2 (see FIG. 6). For example, the total reference power amount NV2 = the reference power amount NV1 × 2. In this preferred embodiment, it is possible to supply electric power of the reference power amount NV2 in total to both the first vehicle 6A and the second vehicle 6B per unit time.

In the owned facility 5, electric power is supplied to the secondary battery 7 mounted on the vehicle 6 so that the secondary battery 7 is charged by connecting the power supply cable 40 to the vehicle 6. In the owned facility 5, electric power supplied to the secondary battery 7 of the vehicle 6 is electric power supplied from the power supply 10. As described above, the power supply 10 includes the system power supply 20 and the renewable energy power supply 30. Thus, the supply source of electric power to be supplied to the secondary battery 7 of the vehicle 6 is either the system power supply 20 or the renewable energy power supply 30. In this example, electric power from the system power supply 20 is purchased electric power purchased from an electric power company. Therefore, electric power from the renewable energy power supply 30 is more reasonable than electric power from the system power supply 20. In view of this, in charging the secondary battery 7 mounted on the vehicle 6, it is economically more preferable for the user to supply a larger amount of electric power from the renewable energy power supply 30 than from the system power supply 20. Even in the case of charging the plurality of vehicles 6 as in this preferred embodiment, it is preferable to charge a larger amount of electric power from the renewable energy power supply 30 than from the system power supply 20 in charging the secondary batteries 7 mounted on the vehicles 6.

In view of the above, in this preferred embodiment, the power supply system 100 makes a charging plan P10 (see FIG. 6) to charge the secondary batteries 7 mounted on the plurality of vehicles 6 (the first vehicle 6A and the second vehicle 6B in this preferred embodiment) with a larger amount of electric power supplied from the renewable energy power supply 30. In this preferred embodiment, the charging plan P10 is made without acquiring the SOC of the vehicles 6 (the first vehicle 6A and the second vehicle 6B in this example). In this preferred embodiment, as illustrated in FIG. 2, the controller 60 includes a storage 61, a mode switcher 62, a first acquirer 63, a second acquirer 65, a predictor 67, a planner 69, a charging controller 71, and a notifier 73. Each section constituting the controller 60 may be implemented by software or may be implemented by hardware, for example. Each section constituting the controller 60 may be implemented by one or more processors, or may be implemented by circuitry.

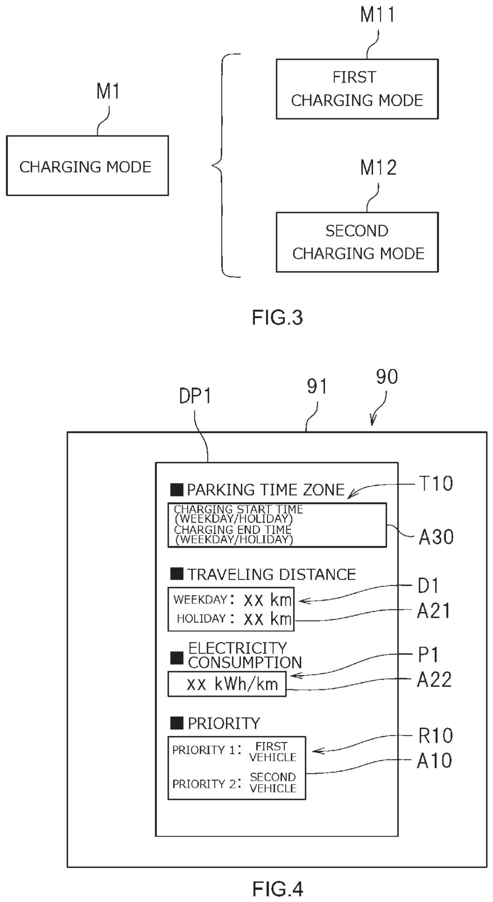

FIG. 3 is an illustration for a charging mode M1. In this preferred embodiment, a plurality of charging modes are set beforehand as the charging mode M1 (see FIG. 3) to be used in charging the plurality of vehicles 6. As illustrated in FIG. 3, the charging mode M1 herein includes a first charging mode M11 and a second charging mode M12 different from the first charging mode M11. The first charging mode M11 is a mode in which the plurality of vehicles 6 connected to the power supply cables 40 are charged at the same time. In the first charging mode M11, both the first vehicle 6A and the second vehicle 6B are charged at the same time. In the first charging mode M11, it is possible to perform quantitative charging with electric power of the total reference power amount NV2 at maximum per unit time.

FIG. 4 is a view illustrating an example of a setting screen DP1. The second charging mode M12 is a mode in which the plurality of vehicles 6 connected to the power supply cables 40 are sequentially charged with a priority R10 (see FIG. 4) so that the timings of charging do not overlap. In the second charging mode M12, any one of the plurality of vehicles 6 is charged. For example, in the case where the first vehicle 6A and the second vehicle 6B are connected to the plurality of power supply cables 40, in the second charging mode M12, only one of the first vehicle 6A or the second vehicle 6B is charged, while the other is set on standby. In the second charging mode M12, it is possible to perform quantitative charging with electric power of the reference power amount NV1 at maximum per unit time. In the second charging mode M12, the vehicles 6 are sequentially charged from the vehicle 6 with a higher priority R10.

In the second charging mode M12, the method of determining the priorities R10 in charging the vehicles 6 (hereinafter referred to simply as the priorities R10 of the vehicles 6) is not particularly limited. In this example, the priorities R10 of the vehicles 6 are set in advance by the user. For example, the user sets the priorities R10 of the vehicles 6 using the user terminal 90. In this example, the setting screen DP1 (see FIG. 4) is displayed on the screen 91 of the user terminal 90. As illustrated in FIG. 4, the setting screen DP1 shows a ranking setting area A10. The user manipulates an input device 92 (see FIG. 2) to input the priorities R10 of the vehicles 6 in the rank setting area A10. Subsequently, the user presses a determination button (not shown) on the setting screen DP1, thereby transmitting information on the priorities R10 of the vehicles 6 to the controller 60. The controller 60 receives the information on the priorities R10 of the vehicles 6 and causes the storage 61 to store the information. In the second charging mode M12, charging is sequentially performed from the vehicle 6 with a higher priority R10 based on the priorities R10 of the vehicles 6. In this preferred embodiment, the priorities R10 are higher in the order of the first vehicle 6A and the second vehicle 6B. Therefore, in the second charging mode M12, charging is performed in the order of the first vehicle 6A and the second vehicle 6B.

A specific example of the priorities R10 of the vehicles 6 are not particularly limited. For example, the order of the vehicles 6 when the required charge amounts V1 (see FIG. 6) described later of the vehicles 6 are arranged in ascending order may be the priorities R10 of the vehicles 6. Alternatively, the order of the vehicles 6 when the required charge amounts V1 of the vehicles 6 are arranged in descending order may also be the priorities R10 of the vehicles 6.

In this preferred embodiment, the mode switcher 62 in FIG. 2 switches the charging mode M1 in charging the vehicles 6. The mode switcher 62 herein is configured or programmed to switch the charging mode M1 to either the first charging mode M11 or the second charging mode M12.

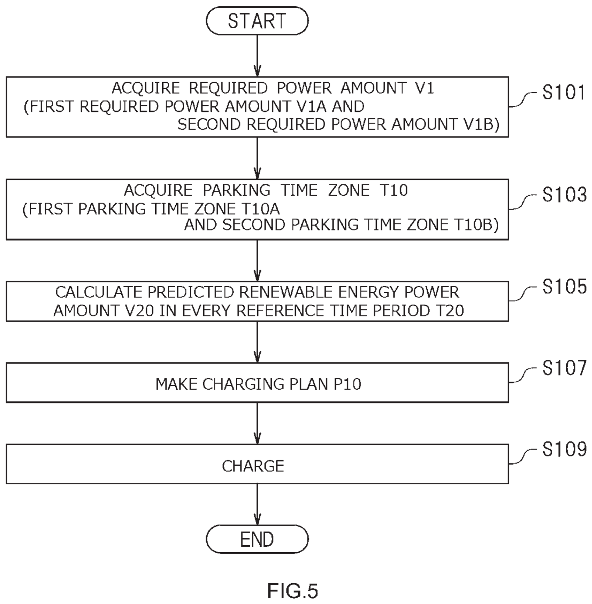

Next, a procedure of charging the secondary batteries 7 mounted on the vehicles 6 will be described with reference to the flowchart of FIG. 5. As illustrated in FIG. 1, during charging, the first vehicle 6A and the second vehicle 6B are parked in a parking lot of the owned facility 5. In a state where the vehicles 6 are parked in the parking lot, the power supply cables 40 are connected to the vehicles 6. In this example, the first vehicle 6A is connected to the first power supply cable 40A. The second vehicle 6B is connected to the second power supply cable 40B. The first vehicle 6A and the second vehicle 6B are both connected to the power supply 10 (the system power supply 20 and the renewable energy power supply 30 in this example) via the panel board 52 and others.

In such a state, first, in step S101 in FIG. 5, the first acquirer 63 in FIG. 2 acquires a required charge amount V1 of the secondary battery 7 of the vehicle 6 connected to the power supply cable 40. The required charge amount V1 is the amount of electric power that can charge the secondary battery 7 of the vehicle 6 connected to the power supply cable 40. For example, in the state where the vehicle 6 is connected to the power supply cable 40, the secondary battery 7 can become a fully charged state by charging the secondary battery 7 with electric power of the required charge amount V1. That is, the required charge amount V1 is the amount of electric power necessary for the secondary battery 7 to reach the fully charged state. The required charge amount V1 is calculated by, for example, reference power amount NV1 $\times$ charging time.

FIGS. 6 through 9 are graphs showing examples of the charging plan P10. In FIGS. 6 through 9, the abscissa represents an elapsed time, and the ordinate represents an electric power amount. In this preferred embodiment, the first acquirer 63 acquires the required charge amounts V1 of the secondary batteries 7 of the vehicles 6 connected to the power supply cables 40. The required charge amounts V1 herein include a first required charge amount V1A of the first secondary battery 7A of the first vehicle 6A (see, for example, FIG. 6) and a second required charge amount V1B of the second secondary battery 7B of the second vehicle 6B (see, for example, FIG. 6). The first acquirer 63 acquires the first required charge amount V1A of the first secondary battery 7A of the first vehicle 6A connected to the first power supply cable 40A and the second required charge amount V1B of the second secondary battery 7B of the second vehicle 6B connected to the second power supply cable 40B, as the required charge amounts V1. The first required charge amount V1A and the second required charge amount V1B may be the same or different from each other. In this preferred embodiment, the sum of the first required charge amount V1A and the second required charge amount V1B is referred to as a total required charge amount V1C (see, for example, FIG. 6).

The method by which the first acquirer 63 acquires the required charge amounts V1 (the first required charge amount V1A and the second required charge amount V1B in this example) of the vehicles 6 is not particularly limited. For example, the first acquirer 63 may acquire the required charge amount V1 by calculation based on information obtained from the user (the user terminal 90 in this example). As illustrated in FIG. 4, the setting screen DP1 displayed on the screen 91 of the user terminal 90 includes a distance area A21 for inputting a traveling distance D1 and an electricity consumption area A22 for inputting an electricity consumption P1. The traveling distance D1 refers to a distance in which the vehicle 6 travels, for example, a distance from departure from the owned facility 5 to return (i.e., a distance in which vehicle 6 has traveled after previous charging). The electricity consumption P1 refers to the amount of electric power consumed per unit distance in which the vehicle 6 travels, in the secondary battery 7 mounted on the vehicle 6. The user specifies the vehicle 6 as a target for input and inputs the traveling distance D1 to the distance area A21 and the electricity consumption P1 to the electricity consumption area A22 via the input device 92. Subsequently, information on the driving distance D1 and the electricity consumption P1 is transmitted to the controller 60. The first acquirer 63 calculates the required charge amount V1 based on the traveling distance D1 and the electricity consumption P1. For example, the first acquirer 63 calculates the required charge amount V1 by multiplying the driving distance D1 by the electricity consumption P1. In this preferred embodiment, the first acquirer 63 calculates the first required charge amount V1A based on the driving distance D1 and the electricity consumption P1 concerning the first vehicle 6A input by the user. The first acquirer 63 calculates the second required charge amount V1B based on the traveling distance D1 and the electricity consumption P1 concerning the second vehicle 6B input by the user. The user may input the required charge amount V1 itself in the user terminal 90. The first acquirer 63 may acquire the required charge amount V1 input by the user from the user terminal 90.

The required charge amount V1 may also be predicted. For example, the first acquirer 63 can acquire past traveling data of each vehicle 6. The traveling data herein shows a traveling distance, a traveling speed, a power consumption (or electricity consumption), an outdoor temperature, and others, associated with an elapsed time. The first acquirer 63 may predict the required charge amount V1 of the vehicle 6 by simulating traveling of the vehicle 6 based on the traveling data. The required charge amount V1 may be predicted by machine learning based on the traveling data. The first acquirer 63 acquires the required charge amount V1 predicted based on the traveling data. The required charge amount V1 (the first required charge amount V1A and the second required charge amount V1B in this example) acquired by the first acquirer 63 is stored in the storage 61 in FIG. **2.**

Then, in step S103 in FIG. **5,** the second acquirer 65 in FIG. 2 acquires a parking time zone T10 of the vehicle 6 on which the secondary battery 7 connected to the power supply cable 40 is mounted. The parking time zone T10 herein refers to a time zone in which the vehicle 6 is parked in a parking lot of the owned facility 5. It is assumed that the user is staying in the owned facility 5 in the parking time zone T10. In the parking time zone T10, the vehicle 6 can be charged in the owned facility 5.

In this preferred embodiment, the second acquirer 65 acquires the parking time zones T10 of the vehicles 6 connected to each power supply cables 40. The parking time zones T10 herein include a first parking time zone T10A in which the first vehicle 6A is parked in the owned facility 5, and a second parking time zone T10B in which the second vehicle 6B is parked in the owned facility 5. The second acquirer 65 acquires the first parking time zone T10A of the first vehicle 6A connected to the first power supply cable 40A and the second parking time zone T10B of the second vehicle 6B connected to the second power supply cable 40B, as the parking time zones T10. In this preferred embodiment, for convenience of description, the first parking time zone T10A and the second parking time zone T10B are the same. However, the first parking time zone T10A and the second parking time zone T10B may be different. In the examples of FIGS. 6 through 9, the parking time zones T10 (the first parking time zone T10A and the second parking time zone T10B in this example) are time zones between time t11 and time t12.

The method by which the second acquirer 65 acquires the parking time zones T10 is not particularly limited. For example, the second acquirer 65 may acquire the parking time zones T10 from the user (the user terminal 90 in this example). As illustrated in FIG. 4, the setting screen DP1 displayed on the screen 91 of the user terminal 90 includes a parking area A30 for inputting the parking time zone T10. The user specifies the vehicle 6 as a target for input and inputs the parking time zone T10 in the parking area A30 via the input device 92. Subsequently, information on the parking time zone T10 is transmitted to the controller 60. The second acquirer 65 acquires the parking time zone T10 transmitted from the user terminal 90. The second acquirer 65 herein acquires the first parking time zone T10A of the first vehicle 6A input by the user from the user terminal 90. The second acquirer 65 acquires the second parking time zone T10B of the second vehicle 6B input by the user from the user terminal 90.

The parking time zone T10 may also be predicted. For example, the second acquirer 65 can acquire a past parking time zone in which each vehicle 6 was parked in the parking lot of the owned facility 5. The past parking time zone herein refers to a past parking time zone for every date or day of the week. The second acquirer 65 may predict a future parking time zone T10 in which each vehicle 6 is parked, based on the past parking time zone. For example, a past parking time zone on the same day of the week as a target day may be predicted as the parking time zone T10. The second acquirer 65 acquires the predicted parking time zone T10. The parking time zones T10 (the first parking time zone T10A and the second parking time zone T10B in this example) acquired by the second acquirer 65 are stored in the storage 61 in FIG. 2.

Subsequently, in step S105 in FIG. 5, the predictor 67 in FIG. 2 calculates a predicted renewable energy power amount V20 (e.g., see FIG. 6) associated with an elapsed time by the renewable energy power supply 30. The predictor 67 herein calculates the predicted renewable energy power amount V20 in every predetermined reference time period T20 in the future. The reference time period T20 is a time period (i.e., interval) that serves as a reference for calculating the predicted renewable energy power amount V20. The predicted renewable energy power amount V20 is the amount of electric power generated by the renewable energy power supply 30 within the reference time period T20.

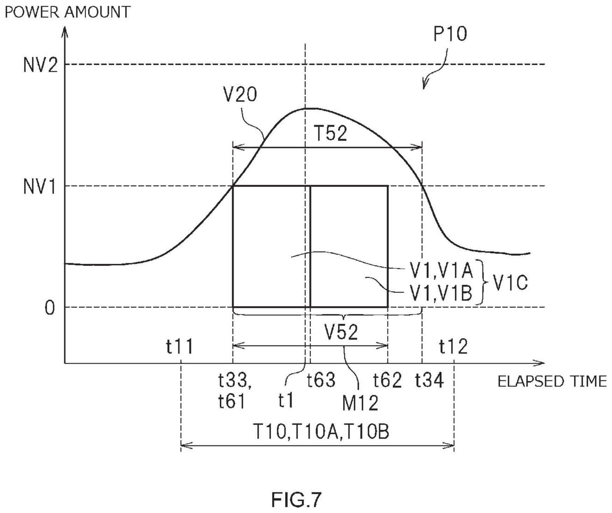

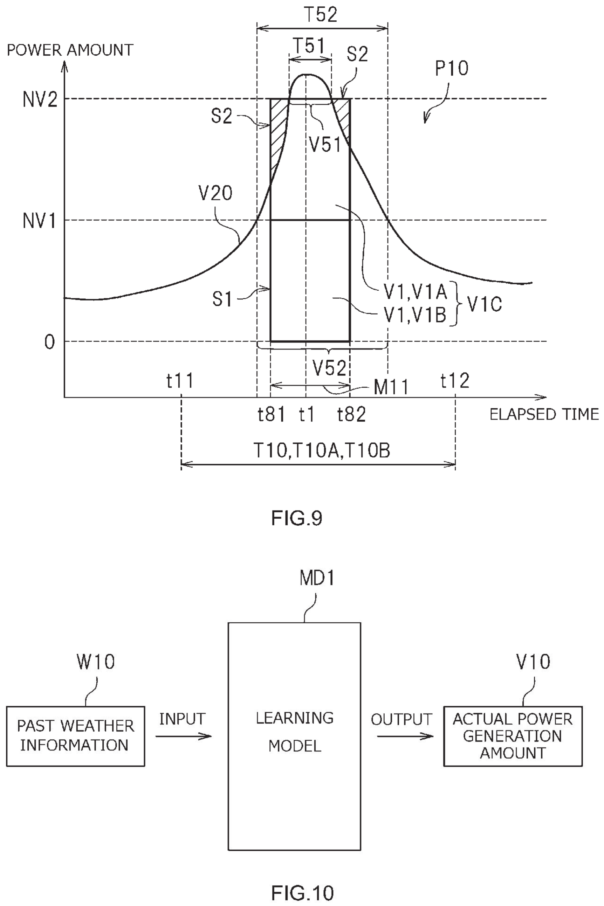

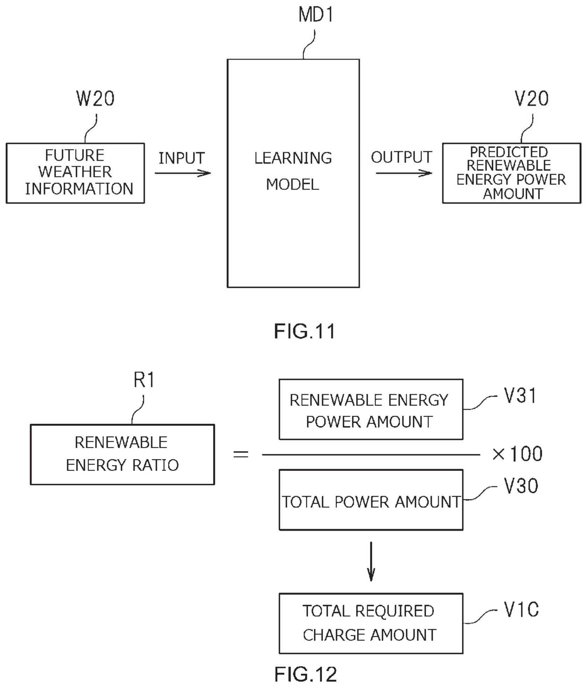

FIG. 10 is a diagram showing an example of a learning model MD1 generated by machine learning. FIG. 11 is a diagram illustrating machine learning. In this preferred embodiment, the predictor 67 predicts the predicted renewable energy power amount V20 based on future weather information W20 (see FIG. 11) associated with an elapsed time (i.e., in every reference time period T20). The future weather information W20 is information on future weather. Examples of the future weather information W20 include weather (sunny, rainy, cloudy, etc.), temperature, solar radiation amount, and precipitation in every reference time period T20. The renewable energy power supply 30 herein is a solar power supply using sunlight as an energy source. Therefore, in the future weather information W20, during hours with a large amount of solar radiation, for example, the predicted renewable energy power amount V20 of the renewable energy power supply 30 is large, as illustrated in FIG. 6. On the other hand, in the future weather information W20, in a period with a small amount of solar radiation, the predicted renewable energy power amount V20 of the renewable energy power supply 30 may be small, as illustrated in FIG. 7. Therefore, it can be said that there is a correlation between the future weather information W20 and the predicted renewable energy power amount V20. The weather information (the future weather information W20 and past weather information W10 described later in this example) can be acquired from a weather information provider that provides weather information, for example. The predictor 67 acquires the future weather information W20 in every future reference time period T20 from a server managed by the weather information provider.

In this preferred embodiment, the method by which the predictor 67 predicts the predicted renewable energy power amount V20 associated with an elapsed time based on the future weather information W20 is not particularly limited. In this example, the predictor 67 predicts the predicted renewable energy power amount V20 by machine learning based on the future weather information W20 associated with a future elapsed time. In this preferred embodiment, as illustrated in FIG. 2, the predictor 67 includes a model generator 67a and a machine learner 67b.

The model generator 67a herein generates the learning model MD1 as illustrated in FIG. 10. In this preferred embodiment, the storage 61 stores training data DT1 (see FIG. 2) in which actual power generation amount V10 and past weather information W10 are associated with the renewable energy power supply 30 associated with a past elapsed time beforehand. The model generator 67a generates the learning model MD1 using the past weather information W10 and the actual power generation amount V10 in every past reference time period T20 as training data DT1. As illustrated in FIG. 10, the model generator 67a generates the learning model MD1 by using the past weather information W10 in every past reference time period T20 as an input and the actual power generation amount V10 in every past reference time period T20 as an output.

Then, as illustrated in FIG. 11, the machine learner 67b inputs the future weather information W20 associated with the future elapsed time to the learning model MD1 and outputs the predicted renewable energy power amount V20 associated with the future elapsed time. The machine learner 67b uses the learning model MD1 to input the future weather information W20 in every future reference time period T20 to the learning model MD1 and outputs the predicted renewable energy power amount V20. The predicted renewable energy power amount V20 output from the learning model MD1 serves as a predicted renewable energy power amount in every future reference time period T20.

In this preferred embodiment, the model generator 67a may add the predicted renewable energy power amount V20 in every future reference time period T20 and the future weather information W20 output from the machine learner 67b to the training data DT1 to generate a new learning model MD1. In the case of newly adding the past weather information W10 and the actual power generation amount V10 in every past reference time period T20, the model generator 67a may add the newly added past weather information W10 and the actual power generation amount V10 in every past reference time period T20 to the training data DT1 to generate a new learning model MD1.

In this preferred embodiment, the predictor 67 may calculate the predicted renewable energy power amount V20 associated with the future elapsed time without using machine learning. The predictor 67 may calculate the predicted renewable energy power amount V20 associated with an elapsed time using a predetermined mathematical expression based on, for example, the temperature and the amount of solar radiation of the future weather information W20. For example, the storage 61 stores renewable energy information (not shown) on the renewable energy power supply 30. The renewable energy information includes a storage capacity PAS [kW] of a solar panel, an installation angle $\theta$ [°] of the solar panel, an installation direction [°] of the sunlight panel, a thermal correction factor $\Delta T$ [°C], a loss factor K, and a maximum value PCS_max [kW] of a solar power amount. The future weather information W20 includes a direct solar radiation amount DS_0 (DRTRAD_30MIN) [MJ/m$^2$], a scattered solar radiation amount SS_0 (SCTRAD_30MIN) [MJ/m$^2$], and a temperature T (AIRTMP) [°C]. The predictor 67 can calculate the predicted renewable energy power amount V20 associated with the elapsed time using Equation (1):

$$V20 = (DS\_0 \cdot \cos\theta + SS\_0 \times 0.5(1 + \cos\theta)) \times PAS \times (1\text{-}0.4 \times (T + \Delta T\text{-}25)100 \times t \qquad (1)$$

The predicted renewable energy power amount V20 may be the minimum value of the value calculated by Equation (1) above and PCS_max $\times$ t. The predicted renewable energy power amount V20 associated with the elapsed time and calculated by the predictor 67 is stored in the storage 61 in FIG. 2.

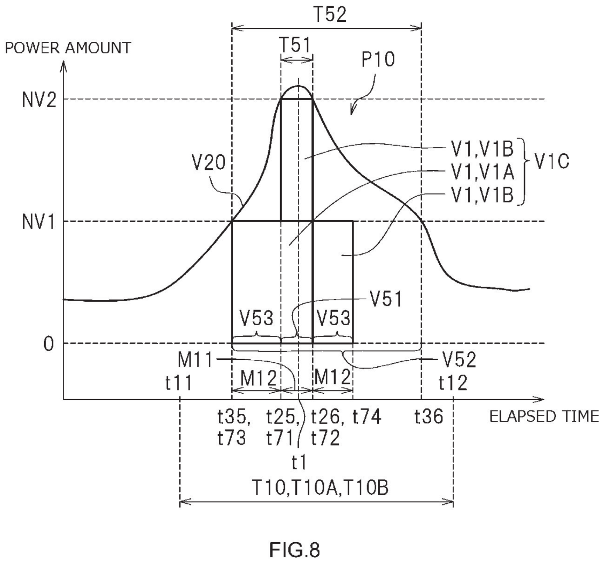

Thereafter, in step S107 in FIG. 5, the planner 69 in FIG. 2 makes a charging plan P10. The charging plan P10 is a plan that specifies when to start charging and when to end charging with respect to the vehicles 6 connected to the power supply cables 40. In this preferred embodiment, the charging plan P10 is a plan that specifies the timing of starting charging and the timing of ending charging for each of the first vehicle 6A and the second vehicle 6B. In this preferred embodiment, as illustrated in FIG. 8, the charging plan P10 may be a plan that determines the timing at which the first charging mode M11 or the second charging mode M12 is set. In this preferred embodiment, the controller 60 performs control of turning the switch 50 on (see FIG. 1), thereby starting charging of the secondary battery 7 of the vehicle 6. On the other hand, the controller 60 performs control of turning the switch 50 off, thereby stopping charging to the secondary battery 7. Specifically, when the first switch 50A is turned on, charging of the first secondary battery 7A of the first vehicle 6A starts, and when the first switch 50A is turned off, charging of the first secondary battery 7A of the first vehicle 6A is stopped. Similarly, when the second switch 50B is turned on, charging of the second secondary battery 7B of the second vehicle 6B starts, and when the second switch 50B is turned off, charging of the second secondary battery 7B of the second vehicle 6B is stopped. Therefore, the charging plan P10 can be a plan that determines the timing of opening and closing (i.e., turning on and off) of the switches 50 (the first switch 50A and the second switch 50B in this example).

FIG. 12 is a view showing a renewable energy ratio R1. In this preferred embodiment, the amount of electric power supplied when charging the plurality of vehicles 6 is referred to as a total power amount V30. The amount of electric power supplied from the renewable energy power supply 30 when charging the plurality of vehicles 6 is referred to as a renewable energy power amount V31. The total power amount V30 is the sum of required charge amounts V1 in the plurality of vehicles 6. In this example, the total power amount V30 is the sum of the first required charge amount V1A and the second required charge amount V1B (i.e., the total required charge amount V1C). A proportion of the renewable energy power amount V31 in the total power amount V30 herein is referred to as the renewable energy ratio R1.

The planner 69 makes the charging plan P10 in which each of the vehicles 6 is charged with the required charge amount V1 of power in the parking time zone T10 of the vehicle 6 and a time zone of the first charging mode M11 or the second charging mode M12 is set such that, based on the predicted renewable energy power amount V20 associated with the elapsed time, the total renewable energy ratio R1 in charging the vehicles 6 is maximized. In this preferred embodiment, the charging plan P10 is made such that the first vehicle 6A is charged with the first required charge amount V1A of power in the first parking time zone T10A and the second vehicle 6B is charged with the second required charge amount V1B of power in the second parking time zone T10B.

In this preferred embodiment, as illustrated in FIG. 6, for example, a peak time t1 is set with respect to the predicted renewable energy power amount V20 associated with the elapsed time. The peak time t1 is a point of time showing the maximum amount of electric power in the predicted renewable energy power amount V20. The peak time t1 is, for example, at noon or around noon. The planner 69 makes the charging plan P10 such that at least one of the vehicles 6 is charged at least at the peak time t1. In other words, the planner 69 makes the charging plan P10 such that either the first charging mode M11 or the second charging mode M12 is set at the peak time t1.

In making the charging plan P10, as illustrated in FIG. 6, the planner 69 first identifies a first candidate time zone T51 from the parking time zone T10 (the time zone where the first parking time zone T10A and the second parking time zone T10B overlap in this example). The first candidate time zone T51 is a time zone in which the predicted renewable energy power amount V20 is greater than or equal to the total reference power amount NV2. The first candidate time zone T51 is a time zone that serves as a candidate for setting the first charging mode M11. For example, in the example of FIG. 6, the time zone between time t21 and time t22 is the first candidate time zone T51. For example, in the example of FIG. **7,** there is no time zone in which the predicted renewable energy power amount V20 is greater than or equal to the total reference power amount NV2. Therefore, in the example of FIG. **7,** the first candidate time zone T51 does not exist.

In this preferred embodiment, as illustrated in FIG. 6, the planner 69 makes the charging plan P10 by setting the first charging mode M11 to charge each of the vehicles 6 with the required charge amount V1 in the first candidate time zone T51. In this example, the planner 69 sets the first charging mode M11 in the first candidate time zone T51 to charge the first vehicle 6A with the first required charge amount V1A of power and the second vehicle 6B with the second required charge amount V1B of power.

In this example, the planner 69 calculates a first total renewable energy power amount V51 that is the amount of electric power supplied from the renewable energy power supply 30 in the first candidate time zone T51. The first total renewable energy power amount V51 is a value obtained by multiplying the time occupied by the first candidate time zone T51 by the total reference power amount NV2. In the example of FIG. 6, the first total renewable energy power amount V51 and the total required charge amount V1C are the same. In this example, as illustrated in FIG. 6, in a case where the first total renewable energy power amount V51 is greater than or equal to the total required charge amount V1C, the planner 69 sets the first charging mode M11 in the first candidate time zone T51, thereby achieving a renewable energy ratio R1 of 100% and maximizing the renewable energy ratio R1. In the example of FIG. 6, the time zone between time t51 and time t52 is the first charging mode M11. In this example, time t51 is the same as time t21. Time t52 is the same as time t22.

In this preferred embodiment, as illustrated in FIG. 7, the planner 69 identifies a second candidate time zone T52 from the parking time zone T10 (the first parking time zone T10A or the second parking time zone T10B in this example). The second candidate time zone T52 is a time zone in which the predicted renewable energy power amount V20 is greater than or equal to the reference power amount NV1. The second candidate time zone T52 is a time zone that serves as a candidate for setting the first charging mode M11 or the second charging mode M12. For example, in the example of FIG. 7, the time zone between time t33 and time t34 is the second candidate time zone T52.

In this preferred embodiment, as illustrated in FIGS. 7 and 8, the planner 69 makes the charging plan P10 by setting the first charging mode M11 or the second charging mode M12 to charge each of the vehicles 6 with the required charge amount V1 of power in the second candidate time zone T52. In this example, the planner 69 sets the first charging mode M11 or the second charging mode M12 in the second candidate time zone T52 to charge the first vehicle 6A with the first required charge amount V1A of power in the first parking time zone T10A and to charge the second vehicle 6B with the second required charge amount V1B of power in the second parking time zone T10B.

In this preferred embodiment, as illustrated in FIG. 7, the planner 69 calculates a second total renewable energy power amount V52 that is the amount of electric power supplied from the renewable energy power supply 30 in the second candidate time zone T52. The second total renewable energy power amount V52 is a value obtained by multiplying the time occupied by the second candidate time zone T52 by the reference power amount NV1. In this example, as illustrated in FIG. 7, in a case where the second total renewable energy power amount V52 is greater than or equal to the total required charge amount V1C, the planner 69 sets the second charging mode M12 in the second candidate time zone T52, thereby achieving a renewable energy ratio R1 of 100% and maximizing the renewable energy ratio R1. As illustrated in the example of FIG. 7, when the second charging mode M12 is set, the order of charging the vehicles 6 is determined based on the priorities R10 (see FIG. 4). In this example, charging is performed in the order of the first vehicle 6A and the second vehicle 6B based on the priorities R10. In the example of FIG. 7, the time zone between time t61 and time t62 is the second charging mode M12. For example, the time zone between time t61 and time t63 is the charging time zone for charging the first vehicle 6A with the first required charge amount V1A of power. The time zone between time t63 and time t62 is the charging time zone for charging the second vehicle 6B with the second required charge amount V1B.

In this preferred embodiment, as illustrated in FIG. 8, it is possible to set both the first charging mode M11 and the second charging mode M12 to make the charging plan P10. In this case, the planner 69 makes the charging plan P10 such that the renewable energy ratio R1 is maximized. For example, in the example of FIG. 8, the first candidate time zone T51 is the time zone between time t25 and time t26. The second candidate time zone T52 is the time zone between time t35 and time t36. In this case, for example, the planner 69 sets the first candidate time zone T51 in the first charging mode M11. At this time, in the first charging mode M11, it is possible to secure electric power of the first total renewable energy power amount V51 in the total required charge amount V1C. In this example, the amount of a difference power amount V53, which is a difference in power amount between the total required charge amount V1C and the first total renewable energy power amount V51, is secured in the second charging mode M12. In the example of FIG. 8, the second charging mode M12 is set before and after the first charging mode M11. In the example of FIG. 8, by setting the second charging mode M12, the first charging mode M11, and then the second charging mode M12 in this order in the second candidate time zone T52, it is possible to make the charging plan P10 such that the renewable energy ratio R1 is 100%.

In the example of FIG. 8, the time zone between time t71 and time t72 is in the first charging mode M11. The time zone between time t73 and time t71 and the time zone between time t72 and time t74 are in the second charging mode M12. In this example, the time zone between time t73 and time t71 is the charging time zone for charging the first vehicle 6A with the first required charge amount V1A of power. The time zone between time t72 and time t74 is the charging time zone for charging the second vehicle 6B with the second required charge amount V1B of power. In the example of FIG. 8, the first charging mode M11 and the second charging mode M12 are set continuously. Alternatively, in the case where the renewable energy ratio R1 is at maximum, a predetermined interval may be set between the first charging mode M11 and the second charging mode M12. The first charging mode M11 itself may be continuous or intermittent. The second charging mode M12 may be continuous or intermittent.

In the example of FIG. 9, the first total renewable energy power amount V51 in the first candidate time zone T51 is less than the total required charge amount V1C, and the second total renewable energy power amount V52 in the second candidate time zone T52 is also less than the total required charge amount V1C. Therefore, in the example of FIG. 9, the charging plan P10 cannot be made such that the renewable energy ratio R1 is 100%. Even in the case where the charging plan P10 cannot be made such that the renewable energy ratio R1 is 100%, the planner 69 makes the charging plan P10 by setting the first charging mode M11 or the second charging mode M12 to charge each of the vehicles 6 with the required charge amount during the parking time zone T10 so that the renewable energy ratio R1 is at maximum. In the example of FIG. 9, in the first charging mode M11, in the time zone between time t81 and time t82, an area S1 below the predicted renewable energy electric power amount V20 associated with the elapsed time represents the amount of electric power supplied from the renewable power supply 30, and an area S2 between the predicted renewable energy power amount V20 and the total reference electric power amount NV2 represents electric power supplied from the system power supply 20. In this example, it is preferable to make the charging plan P10 such that the first charging mode M11 is set to maximize the area S1 below the predicted renewable electric power amount V20, that is, minimize the area S2 above the predicted renewable energy power amount V20. In the example of FIG. 9, the time zone between time t81 and time t82 is the first charging mode M11.

In this manner, after the charging plan P10 is make by setting the first charging mode M11 or the second charging mode M12 in the parking time zone T10, in next step S109 in FIG. 5, the charging controller 71 in FIG. 2 charges the secondary batteries 7 mounted on the vehicles 6 connected to the power supply cables 40 in accordance with the charging plan P10. The charging controller 71 controls opening and closing of the switch 50 to charge the secondary batteries 7 in accordance with the charging plan P10. In other words, the charging controller 71 controls the switch 50 to turn the switch 50 on or off to charge the secondary batteries 7 in accordance with the charging plan P10. In this example, before charging starts, the first switch 50A and the second switch 50B are off. The charging controller 71 turns on the first switch 50A and the second switch 50B on at the timing when the first charging mode M11 starts in the charging plan P10. Accordingly, the first secondary battery 7A of the first vehicle 6A and the second secondary battery 7B of the second vehicle 6B are charged at the same time. The charging controller 71 turns the first switch 50A and the second switch 50B off at the timing when the first charging mode M11 ends. Accordingly, charging of the first secondary battery 7A of the first vehicle 6A and charging of the second secondary battery 7B of the second vehicle 6B are stopped at the same time.

The charging controller 71 turns the first switch 50A on at the timing when charging of the first vehicle 6A starts, and turns the first switch 50A off at the timing when charging of the first vehicle 6A stops, in the second charging mode M12. In the second charging mode M12, while the first vehicle 6A is being charged, the second switch 50B remains off. The charging controller 71 turns the second switch 50B on at the timing when charging of the second vehicle 6B starts, and turns the second switch 50B off at the timing when charging of the second vehicle 6B stops, in the second charging mode M12. In the second charging mode M12, while the second vehicle 6B is being charged, the first switch 50A remains off.

In the example of FIG. 6, the charging controller 71 starts the first charging mode M11 by turning the first switch 50A and the second switch 50B on at time t51 in accordance with the charging plan P10. In the first charging mode M11 of FIG. 6, electric power generated from the renewable energy power supply 30 is supplied to both the first vehicle 6A and the second vehicle 6B, thereby charging the first secondary battery 7A and the second secondary battery 7B. The charging controller 71 turns the first switch 50A and the second switch 50B off at time t52 so that the first charging mode M11 finishes and charging of the first vehicle 6A and the second vehicle 6B ends.

In the example of FIG. **7,** the charging controller 71 starts the second charging mode M12 by turning the first switch 50A on at time t61 while keeping the second switch 50B off in accordance with the charging plan P10. In the second charging mode M12 of FIG. 7, charging of the first vehicle 6A starts at time t61. Then, at time t63, the charging controller 71 turns the first switch 50A off and turns the second switch 50B on. Accordingly, charging of the first vehicle 6A is finished and charging of the second vehicle 6B is started. At time t62, the charging controller 71 turns off the second switch 50B, and charging of the second vehicle 6B finishes. In the example of FIG. 7, the second charging mode M12 ends at time t62.

In the example of FIG. 8, the charging controller 71 starts the second charging mode M12 by turning the first switch 50A on at time t73 while keeping the second switch 50B off in accordance with the charging plan P10. In the second charging mode M12 of FIG. 8, charging of the first vehicle 6A starts at time t73. Then, at time t71, the charging controller 71 keeps the first switch 50A on while turning the second switch 50B on. As a result, the charging mode M1 switches from the second charging mode M12 to the first charging mode M11. Therefore, from time t71, charging of both the first vehicle 6A and the second vehicle 6B is performed. Thereafter, at time t72, the charging controller 71 turns the first switch 50A off while keeping the second switch 50B on. Accordingly, the charging mode M1 switches from the first charging mode M11 to the second charging mode M12. At time t72, charging of the first vehicle 6A ends. In the second charging mode M12 of FIG. 8, only charging of the second vehicle 6B continues at time t72. Then, at time t74, the charging controller 71 turns the second switch 50B off, and charging of the second vehicle 6B ends. In the example of FIG. 8, the second charging mode M12 ends at time t74.

In the example of FIG. 9, the charging controller 71 starts the first charging mode M11 by turning the first switch 50A and the second switch 50B on at time t81 in accordance with the charging plan P10. In the first charging mode M11 of FIG. 9, both electric power from the system power supply 20 and electric power generated from the renewable energy power supply 30 are supplied to both the first vehicle 6A and the second vehicle 6B so that the first secondary battery 7A and the second secondary battery 7B are charged. The charging controller 71 turns the first switch 50A and the second switch 50B off at time t82 so that the first charging mode M11 ends and charging of the first vehicle 6A and the second vehicle 6B ends.

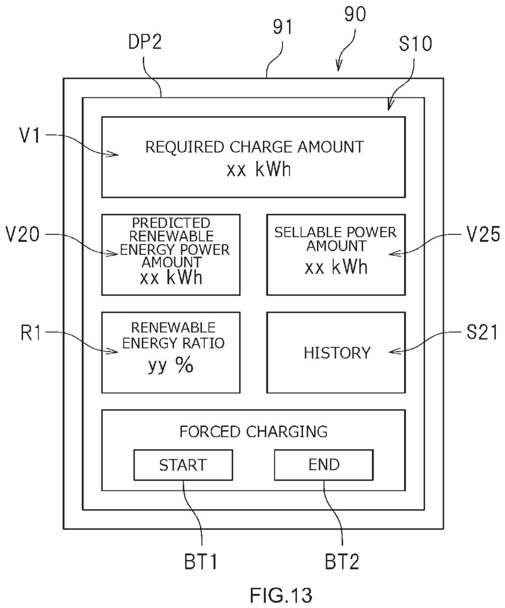

FIG. 13 is a view illustrating an example of a state screen DP2. In this preferred embodiment, the notifier 73 in FIG. 2 may notify the user of a charge state S10 (see FIG. 13) of the secondary batteries 7 of the vehicles 6 (the first vehicle 6A and the second vehicle 6B) connected to the power supply cables 40. A notification destination to which the notifier 73 notifies of the charge state S10 is not particularly limited. In this preferred embodiment, as illustrated in FIG. 13, the notifier 73 causes the screen 91 of the user terminal 90 to display the charge states S10 of the vehicles 6. For example, the notifier 73 transmits the charge states S10 of the vehicles 6 to the user terminal 90 at every predetermined notification interval. In this preferred embodiment, as illustrated in FIG. 2, the terminal controller 93 of the user terminal 90 includes a receiver 95 and a display 96. The receiver 95 receives the charge states S10 of the vehicles 6 transmitted by the notifier 73 at every predetermined notification interval. The display 96 displays the charge states S10 of the vehicles 6 received by the receiver 95 on the screen 91. In this preferred embodiment, the display 96 displays the state screen DP2 showing the charge state S10 (see FIG. 13) on the screen 91. The state screen DP2 may be provided for each vehicle 6.

Information included in the charge state S10 is not particularly limited. In this example, as illustrated in FIG. 13, the charge state S10 includes the required charge amount V1 in charging, the predicted renewable energy power amount V20 at the current time, a sellable power amount V25 that can be sold to an electric power company or the like in the predicted renewable energy power amount V20, and the renewable energy ratio R1. The display 96 shows the state screen DP2 indicating the required charge amount V1, the predicted renewable energy power amount V20, the sellable power amount V25, and the renewable energy ratio R1 on the screen 91. The charge state S10 may include supply source information indicating whether electric power currently supplied to charge the secondary battery 7 of the vehicle 6 is electric power supplied from the system power supply 20 or electric power supplied from the renewable energy power supply 30, during charging. The display 96 may display the state screen DP2 indicating supply source information on the screen 91.

The state screen DP2 may show history information S21 indicating a past charge state S10. The state screen DP2 may include a start button BT1 for forcibly starting charging of the secondary battery 7 of the vehicle 6, and an end button BT2 for forcibly finishing charging of the secondary battery 7. For example, when the user manipulates the power input device 92 and presses the start button BT1, the charging controller 71 of the controller 60 turns the switch 50 on and starts charging of the vehicle 6. For example, during charging, when the user manipulates the input device 92 and presses the end button BT2, the charging controller 71 turns the switch 50 off and finishes charging of the vehicle 6.

In the foregoing manner, in this preferred embodiment, as illustrated in FIG. 1, the power supply system 100 includes the plurality of power supply cables 40, the power supply 10, the plurality of switches 50, and the controller 60. The power supply cables 40 are individually connected to the secondary batteries 7 mounted on the vehicles 6. The power supply 10 is connected to the power supply cables 40 and supplies electric power to the secondary batteries 7 of the vehicles 6. Each of the switches 50 is located between a corresponding one of the power supply cables 40 and the power supply 10, and opens and closes electrical connection between the corresponding secondary battery 7 and the power supply 10. Each of the power supply cables 40 is configured such that the maximum amount of electric power allowed to be supplied to the corresponding secondary battery 7 per unit time is the reference power amount NV1 (see FIG. 6). The sum of the reference power amounts NV1 of the power supply cables 40 is defined as the total reference power amount NV2 (see FIG. 6). In this example, the first charging mode M11 (see FIG. 3) in which the vehicles 6 are charged at a time using electric power of the total reference power amount NV2, and the second charging mode M12 (see FIG. 3) in which any one of the vehicles 6 is charged using electric power of the reference power amount NV1 are set as the charging mode M1 in charging the vehicles 6. As illustrated in FIG. 1, the power supply 10 includes the system power supply 20 that obtains electric power by purchasing electric power and the renewable energy power supply 30 that generates electric power by renewable energy. As illustrated in FIG. 2, the controller 60 includes the first acquirer 63, the second acquirer 65, the predictor 67, the planner 69, and the charging controller 71. The first acquirer 63 acquires the required charge amount V1 of each of the secondary batteries 7 of the vehicles 6 connected to the power supply cables 40, as shown in step S101 in FIG. 5. The second acquirer 65 acquires the parking time zone T10 of each of the vehicles 6 on which the secondary batteries 7 connected to the power supply cables 40 are mounted, as shown in step S103 in FIG. 5. The predictor 67 calculates the predicted renewable energy power amount V20 associated with an elapsed time by the renewable energy power supply 30, as shown in step S105 in FIG. 5. The planner 69 makes the charging plan P10 in which each of the vehicles 6 is charged with the required charge amount V1 of power in the parking time zone T10 of the vehicle 6 and the time zone of the first charging mode M11 or the second charging mode M12 is set such that, based on the predicted renewable energy power amount V20 associated with the elapsed time, the renewable energy ratio R1 (see FIG. 12) that is a proportion of the renewable energy power amount V31 generated by the renewable energy power supply 30 with respect to the total power amount V30 charged to the plurality of vehicles 6, is maximized. The charging controller 71 controls opening and closing of the switch 50 (i.e., turning the switch 50 on or off) such that the vehicles 6 are charged in accordance with the charging plan P10.

In this manner, in the case of charging the secondary batteries 7 of the vehicles 6, the charging plan P10 in which the time zone of the first charging mode M11 or the second charging mode M12 is set in the parking time zone T10 such that the renewable energy ratio R1 is maximized is made. Therefore, by charging the vehicles 6 in accordance with the charging plan P10, the renewable energy ratio R1 can be maximized. Consequently, in charging the secondary batteries 7 of the vehicles 6, a larger amount of electric power generated from the renewable energy power supply 30 can be supplied for charging the secondary batteries 7.

In this preferred embodiment, as illustrated in FIG. 6, the peak time t1 at which the electric power amount is at maximum is set in the predicted renewable energy power amount V20 associated with the elapsed time. The planner 69 makes the charging plan P10 such that at least one of the vehicles 6 is charged at least at the peak time t1. In this manner, since the predicted renewable energy power amount V20 is the largest at the peak time t1, by setting the first charging mode M11 or the second charging mode M12 with reference to the peak time t1, a larger amount of electric power generated from the renewable energy power supply 30 can be supplied to charge the vehicles 6.

In this preferred embodiment, as illustrated in FIG. 6, the planner 69 makes the charging plan P10 by setting the first charging mode M11 such that each of the vehicles 6 is charged with the required charge amount V1 of power in the first candidate time zone T51 which is included in the parking time zone T10 and in which the predicted renewable energy power amount V20 is greater than or equal to the total reference power amount NV2. In this manner, by setting the first charging mode M11 in the first candidate time zone T51, it is possible to make the charging plan P10 such that the renewable energy ratio R1 is maximized.

In this preferred embodiment, as illustrated in FIG. 7, the planner 69 makes the charging plan P10 by setting the first charging mode M11 or the second charging mode M12 such that each of the vehicles 6 is charged with the required charge amount V1 of power in the second candidate time zone T52 which is included in the parking time zone T10 and in which the predicted renewable energy power amount V20 is greater than or equal to the reference power amount NV1. In this manner, by setting the first charging mode M11 or the second charging mode M12 in the second candidate time zone T52, it is possible to make the charging plan P10 such that the renewable energy ratio R1 is maximized.

In this preferred embodiment, the first acquirer 63 acquires the required charge amount V1 calculated based on the traveling distance D1 (see FIG. 4) in which the vehicle 6 has traveled after previous charging and the electricity consumption P1 indicating electric power consumed by the vehicle 6 per unit distance in the driving distance D1. In this manner, the required charge amount V1 can be simply calculated based on the traveling distance D1 and the electricity consumption P1.

In this preferred embodiment, the renewable energy power supply 30 is a solar power supply generated by sunlight. The predictor 67 calculates the predicted renewable energy power amount V20 based on the future weather information W20 (see FIG. 11) associated with a future elapsed time. It is herein assumed that the amount of electric power generated by sunlight changes in accordance with the temperature and the amount of solar radiation in the future weather information W20. That is, there can be a correlation between the future weather information W20 and the amount of electric power generated by the renewable energy power supply 30. Therefore, the predicted renewable energy power amount V20 can be predicted based on the future weather information W20.

In this preferred embodiment, the storage 61 stores the actual power generation amount V10 (see FIG. 10) of the renewable energy power supply 30 associated with the past elapsed time and the past weather information W10 (see FIG. 10) beforehand. As illustrated in FIG. 2, the predictor 67 includes the model generator 67a and the machine learner 67b. As illustrated in FIG. 10, the model generator 67a generates the learning model MD1 by using the past weather information W10 as an input and the actual power generation amount V10 as an output. As illustrated in FIG. 11, the machine learner 67b inputs the future weather information W20 to the learning model MD1 and outputs the predicted renewable energy power amount V20. In this manner, by performing machine learning based on the actual generation electric power amount V10 associated with the past elapsed time and the past weather information W10, the predicted renewable energy power amount V20 associated with the future elapsed time is easily predicted.

As described above, the specification includes the disclosures described in the following items.

Item 1:

A power supply system including:

a plurality of power supply cables individually connected to secondary batteries mounted on a plurality of vehicles;
a power supply that is connected to the power supply cables and supplies electric power to the secondary batteries of the vehicles;
a switch that is located between each of the power supply cables and the power supply and opens and closes electrical connection between the corresponding secondary battery and the power supply; and
a controller, wherein
each of the power supply cables is configured such that a maximum amount of electric power allowed to be supplied to the corresponding secondary battery per unit time is a reference power amount,
a sum of the reference power amounts of the power supply cables is defined as a total reference power amount,
a first charging mode in which the vehicles are charged at a time using electric power of the total reference power amount and a second charging mode in which any one of the vehicles is charged using electric power of the reference power amount are set beforehand as charging modes in charging the vehicles,
the power supply includes

a system power supply that obtains electric power by purchasing electric power, and
a renewable energy power supply that generates electric power by renewable energy, and

the controller includes

a first acquirer that acquires a required charge amount of each of the secondary batteries of the vehicles connected to the power supply cables,
a second acquirer that acquires a parking time zone of each of the vehicles including the secondary batteries connected to the power supply cables,
a predictor that calculates a predicted renewable energy power amount associated with an elapsed time by the renewable energy power supply,
a planner that makes a charging plan in which each of the vehicles is charged with the required charge amount of power in the parking time zone of the vehicle and a time zone of the first charging mode or the second charging mode is set such that, based on the predicted renewable energy power amount associated with the elapsed time, a renewable energy ratio that is a proportion of an amount of renewable energy power generated by the renewable energy power supply with respect to a total amount of power in charging the vehicles is maximized, and a charging controller that controls opening and closing the switch such that the vehicles are charged in accordance with the charging plan.

Item 2:

The power supply system according to Item 1, wherein

a peak time at which the amount of power is at maximum is set in the predicted renewable energy power amount associated with the elapsed time, and
the planner makes the charging plan such that at least one of the vehicles is charged at least at the peak time.

Item 3:

The power supply system according to Item 1 or 2, wherein the planner makes the charging plan by setting the first charging mode such that each of the vehicles is charged with the required charge amount of power in a first candidate time zone which is included in the parking time zone and in which the predicted renewable energy power amount is greater than or equal to the total reference power amount.

Item 4:

The power supply system according to Item 1 or 2, wherein the planner makes the charging plan by setting the first charging mode or the second charging mode such that each of the vehicles is charged with the required charge amount of power in a second candidate time zone which is included in the parking time zone and in which the predicted renewable energy power amount is greater than or equal to the reference power amount.

Item 5:

The power supply system according to any one of Items 1 to 4, wherein the first acquirer acquires the required charge amount calculated based on a traveling distance in which the vehicle has traveled after previous charging and an electricity consumption indicating electric power consumed by the vehicle per unit distance in the traveling distance.

Item 6:

The power supply system according to any one of Item 1 to 5, wherein

the renewable energy power supply is a solar power supply that generates electric power using sunlight, and
the predictor calculates the predicted renewable energy power amount based on future weather information associated with a future elapsed time.

Item 7:

The power supply system according to Item 6, wherein

the controller includes a storage that stores an actual power generation amount of the renewable energy power supply associated with a past elapsed time and past weather information beforehand, and
the predictor includes

a model generator that generates a learning model using the past weather information as an input and the actual power generation amount as an output, and
a machine learner that inputs the future weather information to the learning model and outputs the predicted renewable energy power amount.

**Claims**

1. A power supply system (100) comprising:

a plurality of power supply cables (40) individually connected to secondary batteries (7) mounted on a plurality of vehicles (6);
a power supply (10) that is connected to the power supply cables (40) and supplies electric power to the secondary batteries (7) of the vehicles (6);
a switch (50) that is located between each of the power supply cables (40) and the power supply (10) and opens and closes electrical connection between the corresponding secondary battery (7) and the power supply (10); and
a controller (60), wherein
each of the power supply cables (40) is configured such that a maximum amount of electric power allowed to be supplied to the corresponding secondary battery (7) per unit time is a reference power amount (NV1),
a sum of the reference power amounts (NV1) of the power supply cables (40) is defined as a total reference power amount (NV2),
a first charging mode (M11) in which the vehicles (6) are charged at a time using electric power of the total reference power amount (NV2) and a second charging mode (M12) in which any one of the vehicles (6) is charged using electric power of the reference power amount (NV1) are set beforehand as charging modes (M1) in charging the vehicles (6),
the power supply (10) includes

a system power supply (20) that obtains electric power by purchasing electric power, and
a renewable energy power supply (30) that generates electric power by renewable energy, and

the controller (60) includes

a first acquirer (63) that acquires a required charge amount (V1) of each of the secondary batteries (7) of the vehicles (6) connected to the power supply cables (40),
a second acquirer (65) that acquires a parking time zone (T10) of each of the vehicles (6) including the secondary batteries (7) connected to the power supply cables (40),
a predictor (67) that calculates a predicted renewable energy power amount (V20) associated with an elapsed time by the renewable energy power supply (30),
a planner (69) that makes a charging plan (P10) in which each of the vehicles (6) is charged with the required charge amount (V1) of power in the parking time zone (T10) of the vehicle (6) and a time zone of the first charging mode (M11) or the second charging mode (M12) is set such that, based on the predicted renewable energy power amount (V20) associated with the elapsed time, a renewable energy ratio (R1) that is a proportion of an amount (V31) of renewable energy power generated by the renewable energy power supply (30) with respect to a total amount (V30) of power in charging the vehicles (6) is maximized, and
a charging controller (71) that controls opening and closing the switch (50) such that the vehicles (6) are charged in accordance with the charging plan (P10).

2. The power supply system (100) according to claim 1, wherein

a peak time (t1) at which the amount of power is at maximum is set in the predicted renewable energy power amount (V20) associated with the elapsed time, and
the planner (69) makes the charging plan (P10) such that at least one of the vehicles (6) is charged at least at the peak time (t1).

3. The power supply system (100) according to claim 1 or 2, wherein the planner (69) makes the charging plan (P10) by setting the first charging mode (M11) such that each of the vehicles (6) is charged with the required charge amount (V1) of power in a first candidate time zone (T51) which is included in the parking time zone (T10) and in which the predicted renewable energy power amount (V20) is greater than or equal to the total reference power amount (NV2).

4. The power supply system (100) according to claim 1 or 2, wherein the planner (69) makes the charging plan (P10) by setting the first charging mode (M11) or the second charging mode (M12) such that each of the vehicles (6) is charged with the required charge amount (V1) of power in a second candidate time zone (T52) which is included in the parking time zone (T10) and in which the predicted renewable energy power amount (V20) is greater than or equal to the reference power amount (NV1).

5. The power supply system (100) according to any one of claims 1 to 4, wherein the first acquirer (63) acquires the required charge amount (V1) calculated based on a traveling distance (D1) in which the vehicle (6) has traveled after previous charging and an electricity consumption (P1) indicating electric power consumed by the vehicle (6) per unit distance in the traveling distance (D1).

6. The power supply system (100) according to any one of claims 1 to 5, wherein

   the renewable energy power supply (30) is a solar power supply that generates electric power using sunlight, and the predictor (67) calculates the predicted renewable energy power amount (V20) based on future weather information (W20) associated with a future elapsed time.

7. The power supply system (100) according to claim 6, wherein

   the controller (60) includes a storage (61) that stores an actual power generation amount (V10) of the renewable energy power supply (30) associated with a past elapsed time and past weather information (W10) beforehand, and
   the predictor (67) includes

   a model generator (67a) that generates a learning model (MD1) using the past weather information (W10) as an input and the actual power generation amount (V10) as an output, and
   a machine learner (67b) that inputs the future weather information (W20) to the learning model (MD1) and outputs the predicted renewable energy power amount (V20).

FIG.1

USER TERMINAL 90
91 SCREEN
92 INPUT DEVICE
TERMINAL CONTROLLER 93
RECEIVER 95
DISPLAY 96

100

CONTROLLER 60
STORAGE DT1 61
MODE SWITCHER 62
FIRST ACQUIRER 63
SECOND ACQUIRER 65
PREDICTOR 67
MODEL GENERATOR 67a
MACHINE LEARNER 67b
PLANNER 69
CHARGING CONTROLLER 71
NOTIFIER 73

50,50A,50B SWITCH
21 SMART METER
31 POWER CONDITIONER

EP 4 782 254 A1

FIG.2

M11

FIRST
CHARGING MODE

M1

CHARGING MODE

M12

SECOND
CHARGING MODE

FIG.3

DP1    91    90

■ PARKING TIME ZONE — T10

CHARGING START TIME
(WEEKDAY/HOLIDAY)
CHARGING END TIME — A30
(WEEKDAY/HOLIDAY)

■ TRAVELING DISTANCE — D1

WEEKDAY : XX km — A21
HOLIDAY : XX km

■ ELECTRICITY
  CONSUMPTION — P1

XX kWh/km — A22

■ PRIORITY

PRIORITY 1 : FIRST — R10
              VEHICLE — A10

PRIORITY 2 : SECOND
              VEHICLE

FIG.4

START

ACQUIRE REQUIRED POWER AMOUNT V1
(FIRST REQUIRED POWER AMOUNT V1A AND
            SECOND REQUIRED POWER AMOUNT V1B) ⟋ S101

ACQUIRE PARKING TIME ZONE T10
(FIRST PARKING TIME ZONE T10A
            AND SECOND PARKING TIME ZONE T10B) ⟋ S103

CALCULATE PREDICTED RENEWABLE ENERGY POWER
AMOUNT V20 IN EVERY REFERENCE TIME PERIOD T20 ⟋ S105

MAKE CHARGING PLAN P10 ⟋ S107

CHARGE ⟋ S109

END

FIG.5

FIG.6

POWER AMOUNT

FIG.7

FIG.8

FIG.9

FIG.10

MD1

W20

| FUTURE WEATHER INFORMATION | INPUT → | LEARNING MODEL | OUTPUT → | PREDICTED RENEWABLE ENERGY POWER AMOUNT |

V20

FIG.11

R1

$$\text{RENEWABLE ENERGY RATIO} = \frac{\text{RENEWABLE ENERGY POWER AMOUNT}}{\text{TOTAL POWER AMOUNT}} \times 100$$

V31

V30

TOTAL REQUIRED CHARGE AMOUNT — V1C

FIG.12

EP 4 782 254 A1

DP2    91    90    S10

V1 — REQUIRED CHARGE AMOUNT
xx kWh

V20 — PREDICTED RENEWABLE ENERGY POWER AMOUNT
xx kWh

SELLABLE POWER AMOUNT
xx kWh — V25

R1 — RENEWABLE ENERGY RATIO
yy %

HISTORY — S21

FORCED CHARGING
START    END

BT1    BT2

FIG.13

27

## EUROPEAN SEARCH REPORT

**Application Number**

EP 26 15 1015

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 590 607 A (UNIV HEFEI TECHNOLOGY) 16 January 2018 (2018-01-16) * the whole document * ----- | 1-7 | INV. B60L53/14 B60L53/51 B60L53/63 |
| A | CN 104 124 724 A (HITACHI LTD) 29 October 2014 (2014-10-29) * the whole document * ----- | 1-7 | B60L53/67 H02J3/38 |

**TECHNICAL FIELDS SEARCHED (IPC)**

B60L
H02J

The present search report has been drawn up for all claims

| Place of search | Date of completion of the search | Examiner |
|---|---|---|
| The Hague | 5 June 2026 | Benedetti, Gabriele |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 26 15 1015

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2026

| Patent document cited in search report | | Publication date | Patent family member(s) | Publication date |
|---|---|---|---|---|
| CN 107590607 | A | 16-01-2018 | NONE | |
| CN 104124724 | A | 29-10-2014 | NONE | |

EPO FORM P0459

For more details about this annex : see Official Journal of the European Patent Office, No. 12/82

**REFERENCES CITED IN THE DESCRIPTION**

**Patent documents cited in the description**

- JP H1080071 B

- JP 2012090378 A